# EUROPÄISCHE PATENTSCHRIFT

(11) **EP 0 975 129 B1**
(45) Veröffentlichungstag und Bekanntmachung des Hinweises auf die Patenterteilung: **08.03.2006**
(21) Anmeldenummer: 99110117.1
(22) Anmeldetag: 25.05.1999
(51) Int. Cl.: H04M 1/00, H04M 1/215

(54) **Vorrichtung und Verfahren zur Adaptierung von Zusatzeinrichtungen an eine analoge Endeinrichtung für die Telekommunikation**
Device and method for adapting accessory apparatuses to an analog telecommunication terminal
Dispositif et méthode pour adapter des appareils accessoires à un terminal analogique de télécommunication

(30) Priorität: 21.07.1998 DE 19832664
(43) Veröffentlichungstag der Anmeldung: 26.01.2000
(73) Patentinhaber: Deutsche Telekom AG, 53113 Bonn (DE)
(72) Erfinder: Naumburger, Volkmar Dr., 15537 Erkner (DE)
(74) Vertreter: Mierswa, Klaus

(56) Entgegenhaltungen:
- EP-A- 0 559 948
- US-A- 5 206 898
- US-A- 5 455 859
- US-A- 5 473 676
- US-A- 5 625 679

## Beschreibung

### Technisches Gebiet:

Die Erfindung betrifft ein Verfahren zur Adaptierung von Zusatzeinrichtungen, wie Anrufbeantworter, Freisprecheinrichtungen, Wahlhilfen und dergleichen, an eine analoge Endeinrichtung für die Telekommunikation, insbesondere an ein Telefon. Die Erfindung betrifft weiterhin eine Vorrichtung zur Durchführung des Verfahrens.

### Stand der Technik:

Telekommunikations-Endeinrichtungen, insbesondere einfache Telefone, sollen häufig durch Zusatzeinrichtungen, z.B. Anrufbeantworter, Freisprecheinrichtung, Wahlhiffen, aufgewertet werden. Dabei besteht die Notwendigkeit, einen gemeinsamen Anschluß für beide Einrichtungen unter Aufrechterhaltung der Funktionalität der Endeinrichtung zu schaffen, insbesondere wenn eine Zusatzeinrichtung, etwa eine Freisprecheinrichtung, in den Sprechweg der zu erweiternden Endeinrichtung eingefügt werden soll.

Dazu ist es bekannt, direkt auf das zu erweiternde Endgerät Einfluß zu nehmen, indem entweder vorhandene Modifikationszusätze der Endgeräte genutzt oder aber, wenn diese nicht vorhanden sind, die interne Verdrahtung des Endgerätes entsprechend modifiziert wird. Der erste Lösungsansatz setzt voraus, daß das zu erweiternde Endgerät für Modifikationen für eine Zusatzeinrichtung vorbereitet ist. Dies ist insbesondere bei einfachen Analogtelefonen häufig nicht der Fall. Der zweite Lösungsansatz setzt voraus, daß der Benutzer des Endgeräts entweder selbst hinreichend technische Kenntnisse hat, um die interne Verschaltung des Endgeräts in geeigneter Weise zu ändern, oder aber bereit ist, einen entsprechenden Fachmann zu beauftragen.

Aus der EP 0 559 948 A2 ist eine Anordnung zum Anschalten von Zusatzgeräten an einen Telefon bekannt, bei welcher die Hörerschnur des Telefonhörers mit dem Eingang der Anordnung verbunden ist. Ferner ist der Ausgang der Anordnung mit dem Telefon verbunden. Das ankommende Sprachsignal wird hochohmig ausgekoppelt und durch einen nachgeordneten regelbaren Verstärker auf einen definierten Wert verstärkt. Das so erhaltene Sprachsignal wird über eine dem Verstärker nachgeordnete Buchse für die Anschaltung von Zusatzgeräten bereitgestellt.

### Technische Aufgabe:

Der Erfindung liegt daher die Aufgabe zugrunde, ein Verfahren zur Adaptierung von Zusatzeinrichtungen an analoge Endeinrichtungen für die Telekommunikation, insbesondere in den Sprechweg der zu erweiternden Endeinrichtung eingreifenden Zusatzeinrichtungen, anzugeben, bei welchem Eingriffe in das zu erweiternde analoge Endgerät vermieden werden. Der Erfindung liegt weiterhin die Aufgabe zugrunde, eine

Vorrichtung anzugeben, welche zur Aufrüstung von Endeinrichtungen mit Zusatzeinrichtungen universell einsetzbar ist.

### Offenbarung der Erfindung:

Die Aufgabe wird gelöst durch ein Verfahren zur Adaptierung von Zusatzeinrichtungen an eine analoge Endeinrichtung für die Telekommunikation gemäß Anspruch 1. Die Aufgabe wird weiterhin gelöst durch eine Vorrichtung zur Durchführung des Verfahrens gemäß Anspruch 6. Vorteilhafte Weiterbildungen des Verfahrens und der Vorrichtung sind in den Unteransprüchen 2 bis 5 bzw. 7 bis 9 beschrieben.

Die erfindungsgemäße Lösung beruht darauf, daß die Einfügung einer Zusatzeinrichtung in den Sprechweg eines analogen Endgerätes so erfolgt, daß die Betätigungsfunktionen, die für einen Verbindungsauf- bzw. -abbau erforderlich sind, in gewohnter Weise durchgeführt werden können und die elektrischen Bedingungen in Sicht auf das Telefonnetz unverändert bleiben.

Zu diesem Zweck werden erfindungsgemäß die mechanischen Funktionen, z.B. Eingabe von Wählbefehlen an einer Tastatur, von den Sprechfunktionen der Endeinrichtung getrennt, indem eine netzseitige Parallelschaltung des zu erweiternden analogen Endgerätes und der Zusatzeinrichtung unter Vermeidung einer Beeinflussung des standardisierten Leitungsabschlußwiderstands vorgenommen wird.

Im einzelnen wird zur Abkopplung des ursprünglichen Sprechwegs von der Endeinrichtung zunächst auf deren Netzzugangsleitung hochohmig zugegriffen, wobei der standardisierte Leitungsabschlußwiderstand erhalten bleibt. Das abgegriffene Signal ist vorzugsweise proportional zum Sprachsignal, welches aus dem Telefonnetz kommend an das Endgerät übertragen wird. Das über die Netzzugangsleitung direkt zum Endgerät übertragene Sprachsignal wird im Gegensatz zur normalen Funktionsweise des Endgerätes bei der vorliegenden Erfindung nicht weiter zur Realisierung der Sprechfunktion verwertet.

Der ursprüngliche Sprechweg und die Spracheingabe- und -ausgabeeinheit der Endeinrichtung, insbesondere der Telefonhörer, bleibt vielmehr ungenutzt. Der Telefonhörer kann entfernt werden.

Zur Realisierung eines neuen Sprechwegs, in welchem sich die Zustzeinrichtung problemlos einfügen läßt, wird nun das von der Netzzugangsleitung hochohmig abgegriffenen Sprachsignal oder ein dazu proportionales Signal an die Zusatzeinrichtung und an eine von der Endeinrichtung elektrisch getrennte Spracheingabe- und -ausgabeeinheit geführt. Vorzugsweise wird das abgegriffene Sprachsignal vor dem Einkoppeln in die Zusatzeinrichtung bzw. die Spracheingabe- und -ausgabeeinheit verstärkt, um es etwa auf den Signalpegel zu bringen, den das über die Netzzugangsleitung übertragenen Signal aufweist.

Somit werden "kommende" Sprachsignale, also solche, die über das Telefonnetz an die Endeinrichtung übermittelt werden, an die Zusatzeinrichtung sowie an eine Sprachausgabeeinheit, wie einen Lautsprecher, geleitet. Der Benutzer kann in bekannter Weise das in ein akustisches Signal umgesetzte Sprachsignal hören. Zusätzlich kann die Zusatzeinrichtung die Sprachsignale aufzeichnen oder sonstwie auf sie Einfluß nehmen, sie z.B. als Freisprecheinrichtung laut wiedergeben.

Die "gehenden" Signale, also die vom Benutzer in der Regel akustisch eingegebenen und zur Übertragung über das Telefonnetz in ein elektronisches Signal umgewandelten Sprachsignale, werden bei der Erfindung an einer Spracheingabeeinheit eingegeben, welche ebenfalls vom aufzurüstenden Endgerät elektrisch getrennt ist. Der ursprüngliche Sprechweg des Endgerätes bleibt erfindungsgemäß auch zur Eingabe von Sprachsignalen ungenutzt. Das aufzurüstende Endgerät kann jedoch jederzeit auch ohne Zusatzeinrichung funktionieren, d.h. der urspüngliche Sprechweg wird nicht vollständig deaktiviert oder unterbrochen. Neben der Spracheingabeeinheit oder alternativ dazu erzeugt die Zusatzeinrichtung ein Ausgangssignal, welches in der Regel ebenfalls gesprochener Sprache entspricht, z.B. einen Ansagetext.

Das Ausgangssignal der Spracheingabeeinheit und/oder der Zusatzeinrichtung wird dann unter Erhalt des Leitungsabschlußwiderstands hochohmig in die Netzzugangsleitung des aufzurüstenden Endgerätes eingekoppelt. Vorzugsweise wird dazu eine spannungsgesteuerte Stromquelle verwendet. Dabei dient das Ausgangssignal von Spracheingabeeinheit und/oder Zusatzeinrichtung zur Steuerung des Stromflusses der Stromquelle, deren Ausgang mit der Netzzugangsleitung verbunden ist.

Auf diese Weise werden somit auch gehende Signale, die sowohl direkt vom Benutzer bzw. der Spracheingabeeinheit als auch von der Zusatzeinrichtung erzeugt werden als Sprachsignal in die Netzzugangsleitung eingekoppelt und über das Telefonnetz übertragen.

Zur Ausübung der Wähl- und sonstigen Steuerfunktionalitäten wird weiterhin das Endgerät verwendet. Die Wähl- und Steuersignale werden in bekannter Weise vom Endgerät durch Tastatureingabe oder dergleichen erzeugt und direkt über die Netzzugangsleitung an das Telefonnetz weitergeleitet. Ebenso erreichen Wähl- und Steuersignale, die von der Vermittlungsstelle erzeugt wurden, das Endgerät unmittelbar über die Netzzugangsleitung. Dadurch ist gewährleistet, daß der Benutzer das Endgerät in üblicher Weise weiterverwenden kann. Es sind keine Modifikationen der Steuerung des Endgerätes notwendig.

In einer vorteilhaften Weiterbildung der Erfindung wird die Zusatzeinrichtung und/oder die Spracheingabe- und -ausgabeeinheit in Unabhängigkeit von der Aktivität des Endgerätes funktionell zu- bzw. abgeschaltet. Dazu wird der Spannungspegel auf der Netzzugangsleitung gemessen und die Zusatzeinrichtung und/oder die Spracheingabe- und -ausgabeeinheit in Abhängigkeit davon aktiviert bzw. deaktiviert. Die Messung des Spannungspegels auf der Netzzugangsleitung wird beispielsweise mit einem Komparator vorgenommen, der auf die Netzzugangsleitung zugreift und ein Ausgangssignal liefert, wenn der Spannungspegel eine vorbestimmte Schallschwelle über- bzw. unterschreitet. Dieses Schaltsignal dient dazu, die Zusatzeinrichtung und/oder die Spracheingabe- und -ausgabeeinheit an- bzw. abzuschalten.

In einer weiteren Ausprägung der Erfindung kann die Aktivitätenermittlung auch zu einer wirtschaftlichen Abschaltung der Gesamtstromversorgung herangezogen werden.

### Kurzbeschreibung der Zeichnung:

- Figur 1: eine Endeinrichtung für die Telekommunikation, welche mit einer Vorrichtung zur Durchführung des erfindungsgemäßen Verfahrens aufgerüstet ist;
- Figur 2: ein Prinzipschaltbild eines Systems aus Endeinrichtung und erfindungsgemäßer Vorrichtung;
- Figur 3: die prinzipielle Signalführung innerhalb der Zusatzeinrichung;
- Figur 4: eine erfindungsgemäße Vorrichtung, die als Adapter zum Anschluß einer Zusatzeinrichtung dient.

### Wege zur Ausführung der Erfindung:

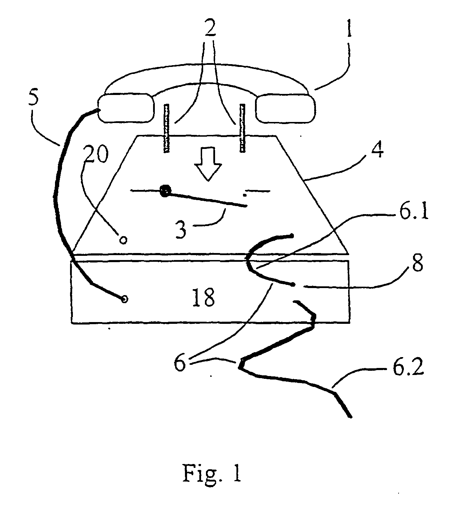

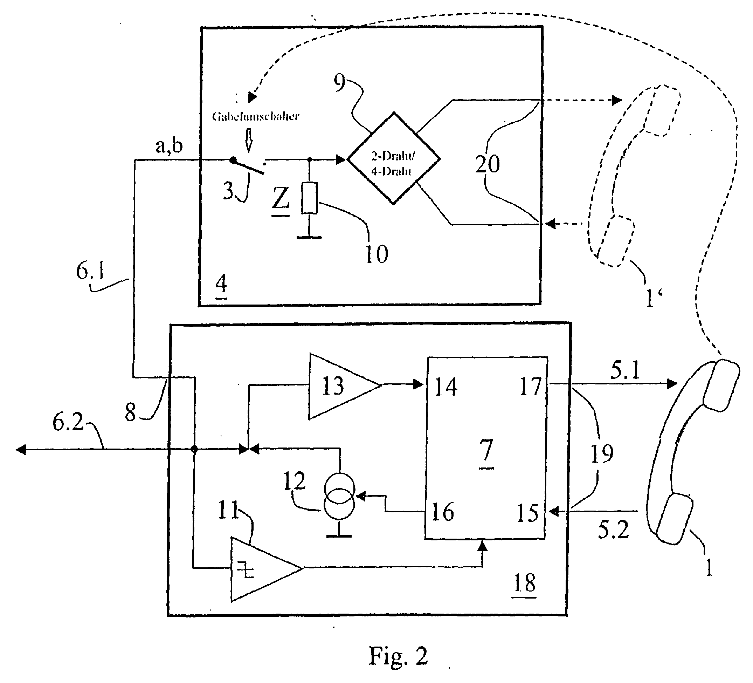

In Figur 1 ist ein analoges Endgerät für die Telekommunikation in Verbindung mit einer Vorrichtung 18 zur Adaptierung von Zusatzeinrichtungen dargestellt. Die Zusatzeinrichtung selbst ist gemäß Figur 2 in die Vorrichtung 18 integriert und hier nicht gezeigt.

Das Endgerät 4 weist eine Hörerauflage 2 auf, auf welcher üblicherweise der Telefonhörer 1 als Spracheingabe- und -ausgabeeinheit des Endgerätes 4 aufliegt. Ein mechanisches Betätigen der Hörerauflage 2, insbesondere durch Auflegen bzw. Abnehmen des Hörers, bewirkt ein Öffnen bzw. Schließen der Gabelschaltung 3, welche im Endgerät 4 integriert ist. Durch die Gabelschaltung 3 ist der elektrische Kontakt zum Telefonnetz über die Netzzugangsleitung 6, mit den hier dargestellten Komponenten 6.1 und 6.2 herstellbar.

Über die Netzanschlußleitung 6 werden üblicherweise die an einer Wähleinheit, z.B. einer Tastatur, eingegebenen Wählbefehle sowie die am Telefonhörer eingegebenen Sprachsignale als elektronisches Signal an das Telefonnetz und zum Kommunikationspartner übertragen. Zur Übertragung von Sprachsignalen ist daher der Telefonhörer 1 eines StandardEndgerätes über einen Anschluß 20 am Endgerät direkt mit dem Endgerät und den darin befindlichen Komponenten, insbesondere einer Wandlerschaltung 9 und der Netzzugangsleitung 6 verbunden. Am Telefonhörer eingegebene Signale werden somit direkt auf die Netzzugangsleitung 6 gegeben.

Erfindungsgemäß ist das Endgerät jedoch in diesem Punkt abgewandelt: Der Telefonhörer 1 ist über die Anschlußleitung 5 nicht mit dem Anschluß 20 am Endgerät, sondern mit einer Schnittstelle 19 an der erfindungsgemäßen Vorrichtung 18 verbunden. Um dies zu realisieren, kann der ursprünglich am Endgerät 4 vorhandene Telefonhörer entfernt und an die Vorrichtung 18 an der Schnittstelle 19 angeschlossen werden. Alternativ dazu ist es möglich, den am Endgerät 4 vorhandene Telefonhörer nicht zu nutzen und statt dessen eine Spracheingabe- und -ausgabeeinheit, die von vorneherein mit der Vorrichtung 18 gekoppelt ist, auf die Hörerauflage 2 des aufzurüstenden Endgerätes 4 aufzulegen. Wesentlich ist, daß Spracheingaben an einer Spracheingabeeinheit 1 erfolgen, welche direkt elektronisch mit der Vorrichtung 18 gekoppelt sind. Die Spracheingabeeinheit ist beispwielsweise die Sprechmuschel eines Hörers mitsamt dazugehöriger Elektronik oder das Mikrofon einer Freisprecheinrichtung. Die Sprachausgabeeinheit ist die Hörmuschel eines Hörers oder der Lautsprecher einer Freisprecheinrichtung

Im Gegensatz zur Einsatzweise eines herkömmlichen Endgerätes ist der Netzanschluß des Endgerätes 4 bei dem hier dargestellten Beispiel nicht direkt mit dem Telefonnetz verbunden, sondern als Netzanschlußleitung 6.1 zunächst mit der Vorrichtung 18. Die Herstellung der Verbindung zwischen Endgerät 4 und Vorrichtung 18 erfolgt über eine erste Schnittstelle 8, welche z.B. eine analoge a/b-Schnittstelle ist. Der Netzzugang des Endgeräts 4 zum Telefonnetz wird über die Netzzugangsleitung 6.1 des Endgerätes und die Netzzugangsleitung 6.2 der Vorrichtung 18 hergestellt, indem die erste Schnittstelle 8 innerhalb der Vorrichtung 18 mit der Netzanschlußleitung 6.2 gekoppelt ist, siehe Figur 2. Die gesamte Netzzugangsleitung 6 wird somit durch die Vorrichtung 18 durchgeschleift, wobei erfindungsgemäß innerhalb der Vorrichtung auf die Netzzugangsleitung zugegriffen wird.

Zur Adaptierung von Zusatzeinrichtungen an eine analoge Endeinrichtung 4 wird die Vorrichtung 18 mittels der Netzzugangsleitung 6.2 an das Telefonnetz angeschlossen. Die Vorrichtung 18 wird mit einer Spracheingabe- und -ausgabeeinheit 1 ausgestattet, falls eine solche nicht bereits Bestandteil der Vorrichtung 18 ist. Diese Spracheingabe- und -ausgabeeinheit 1, hier ein Telefonhörer, wird auf die Hörerauflage 2 des Endgerätes aufgelegt, wobei der ursprünglich dem Endgerät zugeordnete Hörer von der Hörerauflage entfernt wird. Ein mechanisches Abkoppeln des ursprünglich vorhandenen Hörers ist nicht notwendig. Weiterhin wird die Netzzugangsleitung 6.1 der Endeinrichtung 4 über die erste Schnittstelle 8 mit der Vorrichtung 18 verbunden.

Zur genaueren Beschreibung der Funktionsweise der Erfindung wird das Blockdiagramm der Figur 2 herangezogen. Im oberen Teil der Figur 2 sind die die Erfindung betreffenden Komponenten eines Standardendgerätes 4 dargestellt. Der untere Teil der Figur 2 zeigt den prinzipiellen Aufbau der Vorrichtung 18 zur Adaptierung von Zusatzeinrichtungen, wobei die Zusatzeinrichtung 7 in die Vorrichtung 18 integriert ist.

Die die Erfindung betreffenden Komponenten eines Standardtelefons 4 sind der Telefonhörer 1', die Gabelschaltung 3, der Leitungsabschlußwiderstand 10 und die 2-Draht/4-Draht-Wandlung 9. Der Telefonhörer 1' ist über einen Anschluß 20 und eine entsprechende Anschlußleitung an das Endgerät 4 angeschlossen. Erfindungsgemäß wird der Telefonhörer 1' des Endgerätes 4 jedoch nicht verwendet; der ursprüngliche Sprechweg des Endgerätes 4 bleibt ungenutzt. Statt dem Standard-Telefonhörer 1' befindet sich der Hörer 1 der Vorrichtung 18 im Ruhezustand auf der Hörerauflage 2, wie in Figur 1 dargestellt.

Endgerät 4 und Vorrichtung 18 sind über die Netzanschlußleitung 6.1 des Endgerätes 4 miteinander verbunden. Dazu ist die Netzanschlußleitung 6.1, welche im Standardfall direkt mit einer Netzanschlußbuchse verbunden ist, zunächst über eine erste Schnittstelle 8 mit einer im Inneren der Vorrichtung 18 verlaufenden Netzzugangsleitungsstück 6.3 verbunden, welches als Netzzugangsleitung 6.2 der Vorrichtung 18 herausgeführt ist. Das Leitungsstück 6.2 bildet die Netzzugangsleitung der Vorrichtung, mit welcher sie an ein Telefonnetz anschließbar ist. Die drei Leitungselemente 6.1, 6.3 und 6.2 bilden im Anwendungsfall die Netzzugangsleitung des Endgerätes 4, über welche Signalisierungssignale, wie Wähl- und sonstige Steuerzeichen, vom Endgerät über die Vorrichtung 18 zum Telefonnetz und umgekehrt übertragbar sind.

Endgerät 4 und Vorrichtung 18 sind also auf zwei Weisen gekoppelt:
Zum einen besteht eine Kopplung auf elektrischem Weg, indem die Netzzugangsleitung des Endgerätes durch die Vorrichtung 18 durchgeschleift ist, wobei Sprachsignale innerhalb der Vorrichtung 18 aus- bzw. eingekoppelt werden. Zum anderen besteht eine Kopplung zwischen End- und Zusatzeinrichtung, indem die Spracheingabe- und -ausgabeeinheit 1 mit der Vorrichtung 18 über eine Anschlußleitung 5 (5.1, 5.2) elektrisch und mit dem Endgerät 4 durch Auflage auf dessen Hörerauflage mechanisch gekoppelt ist. Die mechanische Kopplung, durch welche die Gabelschaltung 3 betätigbar ist, ist in Figur 2 durch eine gestrichelte Linie vom Telefonhörer 1 zur Gabelschaltung 3 angedeutet.

Der Verbindungsaufbau beginnt bei einfachen Endgeräten 4 damit, daß der Telefonhörer 1 abgehoben wird. Dies bewirkt zunächst ein mechanisches Schließen des Gabelkontaktes 3 über die Hörerauflage 2, womit auch elektrisch die Verbindung zu einem Amt oder einer Nebenstellenanlage über die Netzanschlußleitung 6 herbeigeführt wird. Über die Netzanschlußleitung erhält das Telefon auch eine Speisung mit elektrischer Energie, die für die Funktion des Telefons selbst erforderlich ist.

Infolge der elektrischen Belastung (Gleichstrom) sinkt die Leerlaufspannung auf der Netzanschlußleitung 6 auf einen deutlich geringeren Wert ab. Die Leerlaufspannung beträgt üblicherweise ca. 24 bis 70 V. Bei geschlossener Gabelschaltung, d.h. aktiviertem Endgerät 4, beträgt die Spannung etwa 8 bis 12 V.

An einer Wähleinheit, z.B. einer Tastatur gibt der Nutzer des Endgerätes 4 Wählbefehle ein, welche in elektrische Signale umgesetzt werden, die über die Netzanschlußleitung 6 übertragen werden.

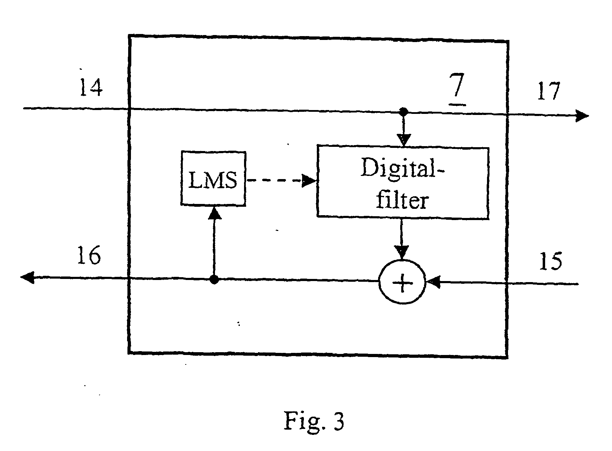

Nach erfolgreicher Verbindungsherstellung treten die Sprechwege in Aktion. Zunächst muß die Netzanschlußleitung auf seiten des Endgerätes mit einem standardisierten Leitungswiderstand 10 (Wechselstrom) abgeschlossen sein. Dies wird beim Standard-Endgerät bereits beim Schließen des Gabelkontaktes 3 ausgeführt. Das über die Netzanschlußleitung 6 (6.2, 6.3, 6.1) übertragene kommende Sprachsignal wird mittels des Wandlers 9 zum Lautsprecher des Telefonhörers 1' geleitet, das am Mikrofon des Telefonhörers 1' eingegebene Sprachsignal wird mittels des Wandlers 9 in die Netzanschlußleitung eingekoppelt. Dieser Standard-Sprechweg mit dem Telefonhörer 1' als Schnittstelle zum Benutzer bleibt bei der vorliegenden Erfindung ungenutzt, aber prinzipiell funktionsfähig. Stattdessen werden Sprachsignale, die aus dem Telefonnetz kommen, über die Netzanschlußleitung 6.2 an die Vorrichtung 18 und dann über die Leitungselemente 6.3 und 6.1 an das Endgerät übertragen werden, innerhalb der Vorrichtung 18 abgegriffen. Sie werden der Zusatzeinrichtung 7 sowie an den Lautsprecher der Spracheingabe- und -ausgabeeinheit 1, die an die Vorrichtung 18 angeschlossen ist, weitergeleitet. Umgekehrt werden an der Spracheingabe- und -ausgabeeinheit 1 eingegebene akustische Signale in elektrische Sprachsignale umgewandelt, über die Leitung 5.2 zur Vorrichtung 18 und zur Zusatzeinrichtung 7 übertragen sowie innerhalb der Vorrichtung in die Netzanschlußleitung 6 eingekoppelt. Auf diese Weise ist der Sprechweg des Endgerätes über die Vorrichtung 18 geführt, wobei eine Zusatzeinrichtung 7 in den Sprechweg integriert wurde, siehe Fig. 3. Die übrigen Funktionen des analogen Endgerätes 4, insbesondere die Steuerung durch Tastatureingaben und dergleichen, sind durch das Abkoppeln des Sprechwegs mittels der Vorrichtung 18 nicht beeinträchtigt, denn diese Signalisierungssignale werden nach wie vor über die Netzanschlußleitung 6, bestehend aus den Elementen 6.1, 6.3 und 6.2, übertragen.

Zur Konstanthaltung der elektrischen Bedingungen aus Sicht des Telefonnetzes ist es notwendig, daß der Leitungsabschlußwiderstand 10 durch die zusätzliche Beschaltung nicht verfälscht wird. Der Leitungsabschlußwiderstand der Gesamtvorrichtung darf daher nicht wesentlich vom Wert des Leitungsabschlußwiderstands 10 abweichen. Aus diesem Grund wird das kommende Signal über einen hochohmigen Verstärker 13 von der Netzüberleitung 6 abgegriffen. der Eingangswiderstand des Verstärkers ist im Idealfall unendlich, in der Praxis sollte er größer als 600 Ohm sein. Das Ausgangssignal des Verstärkers 13 wird einem ersten Eingang 14 der Zusatzeinrichtung 7 zugeführt. Ebenso muß das gehende Signal, das der erste Ausgang 16 der Zusatzeinrichtung 7 bereitstellt, hochohmig an die Netzzuführung 6 eingespeist werden. Erfindungsgemäß erfolgt dies durch eine spannungsgesteuerte Stromquelle 12. Das Ausgangssignal der Stromquelle wird durch das Signal am Ausgang 16 der Zusatzeinrichtung gesteuert und in die Netzzugangsleitung eingespeist.

Die Funktion des Wandlers 9 des Endgeräts wird nunmehr von den Elementen 12 und 13 wahrgenommen.

Das Signal wird einerseits von der Zusatzeinrichtung 7 weiterverarbeitet, z.B. gespeichert oder verstärkt widergegeben. Andererseits wird es über einen zweiten Ausgang 17 der Zusatzeinrichtung 7 und die Anschlußleitung 5.1 an den Lautsprecher der Spracheingabe- und -ausgabeeinheit 1 geleitet. Das gehende, vom Benutzer erzeugte Sprachsignal wird der Zusatzeinrichtung 7 über einen zweiten Eingang 15, welcher über eine Leitung 5.2 mit dem Mikrofon der Spracheingabe- und -ausgabeeinheit verbunden ist, zugeführt und kann über den Ausgang 16 in die Netzzugangsleitung eingekoppelt werden. Ebenso kann das von der Zusatzeinrichtung 7 erzeugte Signal, z.B. eine Textansage eines Anrufbeantworters, über den Ausgang 16 ausgegeben und gleichfalls in die Netzzugangsleitung 6 eingekoppelt werden.

Die Signalwege innerhalb der Zusatzeinrichtung 7 sind im einzelnen in Figur 3 dargestellt. Das von der Zusatzeinrichtung 7 bzw. deren Digitalfilter erzeugte Signal wird mit dem Signal der Spracheingabe-/-ausgabeeinheit zusammengeführt. Falls die Zusatzeinrichtung eine Freisprecheinrichtung ist, kann zusätzlich eine Raumechounterdrückung vorgesehen .sein, hier skizziert durch das Bauelement LMS.

Somit können die zusätzlichen Funktionen der Zusatzeinrichtung realisiert werden, während die Sprechfunktion und die Betätigungsfunktionen der Gesamtanordnung gewährleistet sind. Die Sprechwege der Spracheingabe- und -ausgabeeinheit 1 und der Zusatzeinrichtung 7 sind parallel geschaltet.

Um zu verhindern, daß bei einer nicht aufgebauten Verbindung Signale vom Netz oder in das Netz gespeist werden, wird in einer vorteilhaften Weiterbildung der Erfindung eine Aktivitätserkennung vorgenommen, die das Zu- bzw. Abschalten der Zusatzeinrichtung 7 veranlaßt. Die Aktivität auf der Netzzugangsleitung 6 wird durch eine Messung der Gleichspannung auf der Zugangsleitung 6 mittels eines Komparators 11 ermittelt. Der Komparator 11 greift auf die Netzzugangsleitung 6 zu und gibt ein Ausgangssignal ab, wenn der Spannungspegel eine vorbestimmte Schallschwelle über- bzw. unterschreitet. Der Schwellwert ist dabei so gewählt, daß er zwischen der Leerlaufspannung sowie der Spannung bei Belastung liegt, so daß ein Wechsel zwischen beiden Zuständen sicher erfaßt werden kann. Der Komparator 11 gibt ein Ausgangssignal, welches den Betriebszustand der Endeinrichtung 4 anzeigt, also im wesentlichen, ob die Gabelschaltung 3 offen oder geschlossen ist. Das Ausgangssignal des Komparators 11 dient zur Steuerung des Betriebszustandes der Zusatzeinrichtung 7 und/oder der Spracheingabe- und -ausgabeeinheit 1, vorzugsweise von beiden.

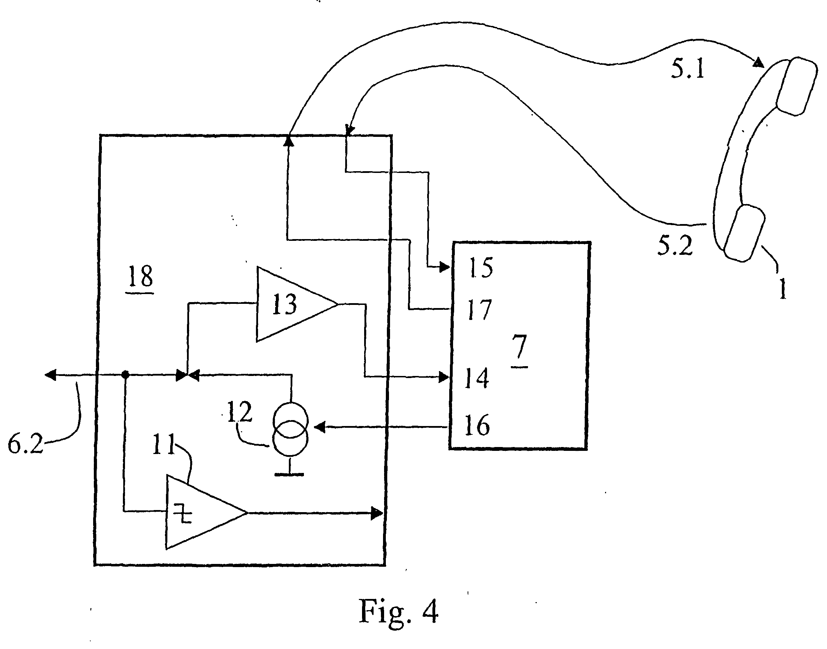

Figur 4 zeigt als weiteres Ausführungsbeispiel eine erfindungsgemäße Vorrichtung 18, die als Adapter zum Anschluß einer Zusatzeinrichtung 7 dient, die Zusatzeinrichtung 7 jedoch nicht selbst enthält. Die Komponenten des Adapters und der Zusatzeinrichtung entsprechen den in Fig. 2 dargestellten und sind mit denselben Bezugsziffern bezeichnet. Mit dem Adapter 18 können beliebige handelsübliche Zusatzeinrichungen 7 an ein einfaches Endgerät angeschlossen werden, ohne daß es auf seiten der Elektronik der Zusatzeinrichtung und des Endgeräts einer Modifikation bedarf.

### Gewerbliche Anwendbarkeit:

Die Erfindung läßt sich im Bereich der Telekommunikation insbesondere als modifiziertes Zusatzgerät oder als Adapter zum Anschluß eines Zusatzgerätes, mit welchem bereits eingesetzte Endgeräte universell erweitert werden können, vorteilhaft gewerblich anwenden, wodurch einem breiten Kundenkreis die Nutzung neuer Telekommunikations-Merkmale eröffnet wird.

### Liste der Bezugszeichen:

- 1, 1': Spracheingabe- und -ausgabeeinheit (Telefonhörer)
- 2: Hörerauflage
- 3: Gabelschaltung
- 4: Endeinrichtung
- 5: Anschlußkabel (Telefonhörer)
- 6, 6.1, 6.2, 6.3: Netzzugangsleitung
- 7: Zusatzeinrichtung
- 8: erste Schnittstelle (Anschluß für Endeinrichtung)
- 9: Wandler
- 10: Leitungsabschlußwiderstand
- 11: Komparator
- 12: spannungsgesteuerte Stromquelle
- 13: hochohmiger Verstärker
- 14: erster Eingang (Zusatzeinrichtung)
- 15: zweiter Eingang (Zusatzeinrichtung)
- 16: erster Ausgang (Zusatzeinrichtung)
- 17: zweiter Ausgang (Zusatzeinrichtung)
- 18: Vorrichtung zur Adaptierung von Zusatzeinrichtungen
- 19: zweite Schnittstelle (Telefonhörer)
- 20: Anschluß für Telefonhörer (Endgerät)

## Patentansprüche

1. Verfahren zur Adaptierung von Zusatzeinrichtungen (7), wie Anrufbeantworter, Freisprecheinrichtungen, Wahlhilfen und dergleichen, an eine analoge Endeinrichtung (4) für die Telekommunikation, wobei die Endeinrichtung (4) eine Netzzugangsleitung (6, 6.1, 6.2, 6.3) zum Anschluß an ein Telefonnetz, über welche Sprach- und Signalisierungssignate übertragbar sind, und eine Gabelschaltung (3) umfaßt, mit folgenden Merkmalen:
a) hochohmiges Zugreifen auf die Netzzugangsleitung (6, 6.1, 6.2, 6.3) der Endeinrichtung (4) unter Erhalt des Leitungsabschlußwiderstands zum Erfassen von zur Endeinrichtung (4) übertragenen Sprachsignalen;
b1) Zuführen des abgegriffenen oder eines dazu proportionalen Sprachsignals an die Zusatzeinrichtung (7);
**gekennzeichnet durch** folgende weiteren Merkmale:
b2) Zuführen des abgegriffenen oder eines dazu proportionalen Sprachsignals auch an eine von der Endeinrichtung (4) elektrisch getrennte Spracheingabe- und -ausgabeeinheit (1);
c) Erzeugen eines Ausgangssignals **durch** die Zusatzeinrichtung (7) und/oder durch die Spracheingabe- und -ausgabeeinheit (1);
d) hochohmiges Einkoppeln des Ausgangssignals in die Netzzugangsleitung (6, 6.1, 6.2) unter Erhalt des Leitungsabschlußwiderstands;
e) direktes Übertragen von Signalisierungssignalen zwischen Endeinrichtung und Telefonnetz über die Netzzugangsleitung (6, 6.1, 6.2).

2. Verfahren nach Anspruch 1, **dadurch gekennzeichnet,**
**daß** der Betriebszustand der Zusatzeinrichtung und/oder die Spracheingabe- und -ausgabeeinheit an den Betriebszustand der Endeinrichtung angepaßt wird, indem der Spannungspegel auf der Netzzugangsleitung gemessen und die Zusatzeinrichtung und/oder die Spracheingabe- und -ausgabeeinheit in Abhängigkeit vom Spannungspegel aktiviert bzw. deaktiviert wird.

3. Verfahren nach Anspruch 2, **dadurch gekennzeichnet,**
**daß** die Zusatzeinrichtung und/oder die Spracheingabe- und -ausgabeeinheit aktiviert wird, wenn der Spannungspegel auf der Netzzugangsleitung eine vorbestimmte Schaltschwelle über- oder unterschreitet.

4. Verfahren nach einem der vorangegangenen Ansprüche, **dadurch gekennzeichnet,**
**daß** das abgegriffene Sprachsignal vor dem Einkoppeln in die Zusatzeinrichtung bzw. die Spracheingabe- und -ausgabeeinheit verstärkt wird.

5. Verfahren nach einem der vorangegangenen Ansprüche, **dadurch gekennzeichnet,**
**daß** das abgegriffene Sprachsignal auf einen ersten Eingangskanal (14) der Zusatzeinrichtung und über einen ersten Ausgangskanal (16) der Zusatzeinrichtung auf den Eingang (5.1) der Spracheingabe- und -ausgabeeinheit geführt wird sowie das Ausgangssignal der Spracheingabe- und -ausgabeeinheit auf einen zweiten Eingangskanal (15) der Zusatzeinrichtung und geführt und über einen zweiten Ausgangskanal (16) der Zusatzeinrichtung in die Netzzugangsleitung eingekoppelt wird.

6. Vorrichtung (18) zur Durchführung des Verfahrens nach einem der vorangegangenen Ansprüche mit folgenden Merkmalen:
a) die Vorrichtung (18) weist eine Netzzugangsleitung (6.2) auf, über welche die Verbindung mit einem Telefonnetz herstellbar ist;
b) die Vorrichtung (18) weist eine erste Schnittstelle (8) auf, über welche die Endeinrichtung (4) an die Vorrichtung (18) anschließbar ist, wobei die Netzzugangsleitung (6.2) der Vorrichtung intern mit der ersten Schnittstelle (8) verbunden ist;
c) die Vorrichtung (18) weist eine eine Spracheingabe- und -ausgabeeinheit (1) und/oder eine zweite Schnittstelle (19) auf, Ober welche eine Spracheingabe- und -ausgabeeinheit (1) an die Vorrichtung (18) anschließbar ist, wobei mittels der Spracheingabe- und -ausgabeeinheit (1) die Gabelschaltung (3) der Endeinrichtung (4) mechanisch oder elektronisch aktivierbar bzw. deaktivierbar ist;
d) eine Zusatzeinrichtung (7), wie Anrufbeantworter, Freisprecheinrichtungen, wahlhilfen und dergleichen, ist über eine dritte Schnittstelle an die Vorrichtung (18) anschließbar oder ist integraler Bestandteil der Vorrichtung (18);
e) auf die Netzzugangsleitung (6.2) der Vorrichtung ist mittels eines hochohmigen Verstärkers (13) zugreifbar, wobei das Ausgangssignal des Verstärkers (13) auf einen ersten Eingang (14) der Zusatzeinrichtung (7) und auf den Eingang (5.1) der Spracheingabe- und -ausgabeeinheit geführt ist;
f) das Ausgangssignal der Spracheingabe- und -ausgabeeinheit (1) ist auf einen zweiten Eingangskanal (15) der Zusatzeinrichtung geführt und hochohmig in die Netzzugangsleitung (6.2) der Vorrichtung (1) einkoppelbar.

7. Vorrichtung nach Anspruch 6, **dadurch gekennzeichnet,**
**daß** sie einen Komparator (11) umfaßt, der auf die Netzzugangsleitung der Vorrichtung zugreift und ein vom Spannungspegel abhängiges Schaltsignal abgibt, welches die Zusatzeinrichtung (7) zu aktivieren oder zu deaktivieren imstande ist.

8. Vorrichtung nach Anspruch 6 oder 7, **dadurch gekennzeichnet,**
**daß** die Spracheingabe- und -ausgabeeinheit (1) der Vorrichtung ein Telefonhörer und/oder eine Freisprecheinrichtung ist.

9. Vorrichtung nach einem der Ansprüche 6 bis 8, **dadurch gekennzeichnet,**
**daß** sie eine spannungsgesteuerte Stromquelle (12) umfaßt zur hochohmigen Einkopplung des Ausgangssignals der Zusatzeinrichtung (7) und/oder der Spracheingabe- und -ausgabeeinheit (1) in die Netzzugangsleitung.

## Claims

1. Method for adapting auxiliary devices (7), such as answering machines, hands-free telephones, automatic dialers, and the like, to an analog terminal device (4) for telecommunications, said terminal device (4) comprising a network access line (6, 6.1, 6.2, 6.3) for connection to a telephone network through which line voice and signaling signals may be transmitted and further comprising a hybrid circuit (3), said method having the following features:
a) high-impedance access by the terminal device (4) to the network access line (6, 6.1, 6.2, 6.3) while maintaining the line termination resistance for detecting voice signals transmitted to the terminal device (4);
b1) delivery to the auxiliary device (7) of the tapped voice signal or a voice signal proportional thereto;
**characterized by** the following additional features:
b2) further delivery of the tapped voice signal or a voice signal proportional thereto to a voice input/output unit (1) that is electrically isolated from the terminal device (4);
c) generation of an output signal by the auxiliary device (7) and/or by the voice input/output unit (1);
d) high-impedance coupling of the output signal into the network access line (6, 6.1, 6.2) while maintaining the line termination resistance;
e) direct transmission of signaling signals between the terminal device and the telephone network via the network access line (6, 6.1, 6.2).

2. Method according to claim 1, **characterized in that** the operating state of the auxiliary device and/or the voice input/output unit is matched to the operating state of the terminal device by measuring the voltage level on the network access line and activating or deactivating the auxiliary device and/or the voice input/output unit as a function of the voltage level.

3. Method according to claim 2, **characterized in that** the auxiliary device and/or the voice input/output unit is activated when the voltage level on the network access line rises above or falls below a predetermined switching threshold.

4. Method according to any one of the preceding claims, **characterized in that** the tapped voice signal is amplified before being coupled into the auxiliary device or the voice input/output unit.

5. Method according to any one of the preceding claims, **characterized in that** the tapped voice signal is routed to the input (5.1) of the voice input/output unit on a first input channel (14) of the auxiliary device and through a first output channel (16) of the auxiliary device, and the output signal of the voice input/output unit is routed to a second input channel (15) of the auxiliary device and is coupled into the network access line through a second output channel (16) of the auxiliary device.

6. Device (18) for carrying out the method according to any one of the preceding claims having the following features:
a) the device (18) has a network access line (6.2) through which the connection to a telephone network can be established;
b) the device (18) has a first interface (8) through which the terminal device (4) can be connected to the device (18), with the network access line (6.2) of the device being internally connected to the first interface (8);
c) the device (18) has a voice input/output unit (1) and/or a second interface (19) through which a voice input/output unit (1) can be connected to the device (18), with the hybrid circuit (3) of the terminal device (4) being mechanically or electronically activatable and deactivatable by means of the voice input/output unit (1);
d) auxiliary devices (7), such as answering machines, hands-free telephones, automatic dialers, and the like, can be connected to the device (18) through a third interface, or are integral components of the device (18);
e) access to the network access line (6.2) of the device is possible by means of a high-impedance amplifier (13), with the output signal of the amplifier (13) being routed to a first input (14) of the auxiliary device (7) and to the input (5.1) of the voice input/output unit;
f) the output signal of the voice input/output unit (1) is routed to a second input channel (15) of the auxiliary device and can be coupled with high impedance into the network access line (6.2) of the device (1).

7. Device according to claim 6, **characterized in that** it comprises a comparator (11) for accessing the network access line of the device and producing a switching signal dependent on the voltage level, said switching signal being capable of activating or deactivating the auxiliary device (7).

8. Device according to claim 6 or 7, **characterized in that** the voice input/output unit (1) of the device is a telephone handset and/or a hands-free telephone.

9. Device according to any one of claims 6 through 8, **characterized in that** it comprises a voltage-controlled current source (12) for high-impedance coupling into the network access line of the output signal of the auxiliary device (7) and/or of the voice input/output unit (1).

## Revendications

1. Procédé destiné à l'adaptation de dispositifs supplémentaires (7), tels que répondeurs téléphoniques, téléphones mains libres, moyens de numérotation et dispositifs similaires, à un équipement terminal analogique (4) pour la télécommunication, l'équipement terminal (4) comprenant aussi bien une ligne d'accès au réseau (6, 6.1, 6.2, 6.3) pour la connexion à un réseau téléphonique permettant de transmettre des signaux vocaux et de signalisation qu'un termineur (3), avec les caractéristiques suivantes:
a) accès à haute impédance à la ligne d'accès au réseau (6, 6.1, 6.2, 6.3) de l'équipement terminal (4) en maintenant la résistance de la terminaison de ligne pour la saisie de signaux vocaux transmis à l'équipement terminal (4);
b1) transmission du signal vocal prélevé ou d'un signal vocal proportionnel au dispositif supplémentaire (7) ;
**caractérisé par** les caractéristiques suivantes:
b2) transmission du signal vocal prélevé ou d'un signal vocal proportionnel aussi à une unité d'entrée et de sortie de la parole (1) séparée électriquement de l'équipement terminal (4);
c) génération d'un signal de sortie par le dispositif supplémentaire (7) et/ou par l'unité d'entrée et de sortie de la parole (1) ;
d) injection à haute impédance du signal de sortie dans la ligne d'accès au réseau (6, 6.1, 6.2) en maintenant la résistance de la terminaison de ligne;
e) transmission directe de signaux de signalisation entre l'équipement terminal et le réseau téléphonique via la ligne d'accès au réseau (6, 6.1, 6.2).

2. Procédé selon la revendication 1, **caractérisé en ce que**
l'état opérationnel du dispositif supplémentaire et/ou l'unité d'entrée et de sortie de la parole est adapté à l'état opérationnel de l'équipement terminal en mesurant le niveau de tension sur la ligne d'accès au réseau et en activant ou désactivant le dispositif supplémentaire et/ou l'unité d'entrée et de sortie de la parole en fonction du niveau de tension.

3. Procédé selon la revendication 2, **caractérisé en ce que**
le dispositif supplémentaire et/ou l'unité d'entrée et de sortie de la parole sont activés lorsque le niveau de tension sur la ligne d'accès au réseau est inférieur ou supérieur à un seuil de commutation prédéfini.

4. Procédé selon l'une des revendications précédentes, **caractérisé en ce que**
le signal vocal prélevé est amplifié avant d'être injecté dans le dispositif supplémentaire ou dans l'unité d'entrée et de sortie de la parole.

5. Procédé selon l'une des revendications précédentes, **caractérisé en ce que**
le signal vocal prélevé est transmis sur une première voie d'entrée (14) du dispositif supplémentaire et sur l'entrée (5.1) de l'unité d'entrée et de sortie de la parole via une première voie de sortie (16) et le signal de sortie de l'unité d'entrée et de sortie de la parole est transmis sur une seconde voie d'entrée (15) du dispositif supplémentaire et injecté dans la ligne d'accès au réseau via une seconde voie de sortie (16) du dispositif supplémentaire.

6. Dispositif (18) destiné à exécuter le procédé selon l'une des revendications précédentes avec les caractéristiques suivantes:
a) Le dispositif (18) est équipé d'une ligne d'accès au réseau (6.2) via laquelle il est possible d'établir la connexion avec un réseau téléphonique;
b) le dispositif (18) est équipé d'une première interface (8) permettant de connecter l'équipement terminal (4) au dispositif (18), la ligne d'accès au réseau (6.2) du dispositif étant reliée à la première interface (8) de manière interne;
c) le dispositif (18) est équipé d'une unité d'entrée et de sortie de la parole (1) et/ou une deuxième interface (19) par laquelle une unité d'entrée et de sortie de la parole (1) peut être connectée au dispositif (18), le termineur (3) de l'équipement terminal (4) pouvant être activé ou désactivé de manière mécanique ou électronique à l'aide de l'unité d'entrée et de sortie de la parole (1);
d) un dispositif supplémentaire (7), tel qu'un répondeur téléphonique, un téléphone mains libres, un moyen de numérotation ou un dispositif similaire, peut être raccordé au dispositif (18) via une troisième interface ou bien est une partie intégrale du dispositif (18);
e) l'accès à la ligne d'accès au réseau (6.2) du dispositif est possible à l'aide d'un amplificateur à haute impédance (13), le signal de sortie de l'amplificateur (13) étant transmis sur une première entrée (14) du dispositif supplémentaire (7) et sur l'entrée (5.1) de l'unité d'entrée et de sortie de la parole;
f) le signal de sortie de l'unité d'entrée et de sortie de la parole (1) est transmis sur une seconde voie d'entrée (15) du dispositif supplémentaire et peut être injecté avec une haute impédance dans la ligne d'accès au réseau (6.2) du dispositif (18).

7. Dispositif selon la revendication 6, **caractérisé en ce qu'**il comprend un comparateur (11) qui accède à la ligne d'accès au réseau du dispositif et émet un signal de connexion en fonction du niveau de tension, ledit signal pouvant activer ou désactiver le dispositif supplémentaire (7).

8. Dispositif selon la revendication 6 ou 7, **caractérisé en ce que**
l'unité d'entrée et de sortie de la parole (1) du dispositif est un combiné et/ou un téléphone mains libres.

9. Dispositif selon l'une des revendications 6 à 8, **caractérisé en ce qu'**il comprend une source de courant commandée par la tension (12) destinée à l'injection à haute impédance du signal de sortie du dispositif supplémentaire (7) et/ou de l'unité d'entrée et de sortie de la parole (1) dans la ligne d'accès au réseau.
